# EUROPÄISCHE PATENTANMELDUNG

(11) **EP 3 120 986 A1**
(43) Veröffentlichungstag der Anmeldung: **25.01.2017**
(21) Anmeldenummer: 16180812.6
(22) Anmeldetag: 22.07.2016
(51) Int. Cl.: B29C 44/18, E04B 1/80, B32B 5/18, B29C 45/14

(54) **VERFAHREN ZUR HERSTELLUNG EINES DÄMMELEMENTS SOWIE EIN ENTSPRECHENDES DÄMMELEMENT**

(30) Priorität: 24.07.2015 DE 102015112154
(71) Anmelder: ISOVER SAINT-GOBAIN, 92400 Courbevoie (FR)
(72) Erfinder: Middendorf, Hans-Dieter, 33415 Verl (DE); Dorn, Rainer, 76448 Durmersheim (DE)
(74) Vertreter: Kuhnen & Wacker

(57) **Zusammenfassung**

Die Erfindung betrifft ein Verfahren zur Herstellung eines Dämmelements (1) mit wenigstens zwei unterschiedlichen geschäumten Kunststoffen als Dämmmaterial, mit den Schritten: Bereitstellen einer Dämmschale (2) aus einem ersten geschäumten Kunststoff, welche im Inneren einen allseits umschlossenen Innenraum (25) aufweist, Einführen wenigstens einer Injektionseinrichtung (6) durch eine Wandung der Dämmschale (2) hindurch in den Innenraum (25), Einbringen eines Grundmaterials eines zweiten Kunststoffs, welcher sich vom ersten Kunststoff unterscheidet, in den Innenraum (25) der Dämmschale (2) mittels der Injektionseinrichtung (6), und Entfernen der wenigstens einen Injektionseinrichtung (6) aus dem Innenraum (25) sowie Aufschäumen des zweiten Kunststoffs zur Ausbildung eines Dämmkerns (3) im Innenraum (25) der Dämmschale (2). Sie betrifft darüber hinaus auch ein derart hergestelltes Dämmelement. Durch die Erfindung wird ein verbessertes Verfahren zur Herstellung eines Dämmelements mit wenigstens zwei unterschiedlichen geschäumten Kunststoffen als Dämmmaterial und dabei zugleich ein besonders stabiles und langlebiges Dämmelement geschaffen.

## Beschreibung

Die Erfindung betrifft ein Verfahren zur Herstellung eines Dämmelements mit wenigstens zwei unterschiedlichen geschäumten Kunststoffen als Dämmmaterial nach Anspruch 1. Sie betrifft darüber hinaus auch ein Dämmelement mit den Merkmalen des Oberbegriffs des Anspruches 8.

Zur Wärme- bzw. Schalldämmung an Fassaden wie auch von Dächern ist es weithin bekannt, geschäumte Kunststoffe als Dämmelemente einzusetzen. Zumeist kommt hier ein Polystyrol zum Einsatz, wie insbesondere ein expandiertes Polystyrol (EPS). Polystyrole sind dabei gut geeignete Putzträgermaterialien. Die Dämmwirkung dieses Werkstoffs ist jedoch begrenzt, was insbesondere daran liegt, dass das Zellgas Luft ist und dass Polystyrol einen durchaus erheblichen Anteil an Infrarotstrahlung hindurch lässt.

Um die Dämmwirkung zu verbessern, wurden in der Praxis bislang verschiedene Maßnahmen geprüft. So wurden beispielsweise Trübungsmittel in das Polystyrol eingebracht, wodurch der Durchgang an Infrarotstrahlung verringert werden konnte. Damit ließ sich eine etwas verbesserte Wärmedämmwirkung erreichen.

Um eine noch weitergehende Verbesserung der Dämmwirkung zu erzielen, wurden auch alternative Werkstoffe getestet. So ist es auch bekannt geworden, anstelle von Polystyrol ein Polyurethan (PUR) oder neuerdings vermehrt ein Polyisocyanurat (PIR) zu verwenden. Mit hieraus ausgebildeten Hartschaumplatten lassen sich sehr gute Dämmwerte erzielen. So ist hiermit beispielsweise eine Wärmeleitfähigkeit λ von 0,023 W/mK erreichbar. Diese vorteilhaften Eigenschaften beruhen insbesondere darauf, dass in den Poren des geschäumten Kunststoffes nicht Luft, sondern Gase mit einer geringeren Wärmeleitfähigkeit als Luft, wie etwa Kohlendioxid oder bestimmte Kohlenwasserstoffe als Zellgas vorliegt. Üblicherweise werden PUR oder PIR Dämmstoffe in einem Bandverfahren hergestellt, bei dem beidseitig Deckschichten kaschiert werden. Diese Deckschichten werden zur Vermeidung des Verklebens in der Produktionsanlage und zur Einstellung der Produktdicke benötigt, zusätzlich können sie abhängig vom Kaschiermaterial eine Diffusionsbarriere für das Zellgas darstellen. Es werden auch PUR/PIR Platten ohne eine solche Kaschierung bzw. Deckschicht angeboten.

Nachteilig an den Dämmstoffen PUR oder PIR ist jedoch, dass ein Putz hierauf nur schlecht haftet, weshalb sich diese nicht so ohne weiteres als Dämmmaterial in Wärmedämmverbundsystemen eignen.

Es wurde daher bereits vorgeschlagen, die vorteilhaften Eigenschaften von Polystyrol und PUR dadurch miteinander zu verbinden, dass man ein Dämmelement mit einem Kern aus PUR sowie einer Ummantelung aus Polystyrol bereitstellt.

Ein derartiges Produkt ist aus der EP 0 947 638 A2 bekannt geworden. Der Kern kann dabei durch das Polystyrol vollständig umschäumt sein, so dass er hierin eingebettet ist. Um dabei einen sicheren Halt dieser beiden Werkstoffe aneinander zu erzielen, kann ein Formschluss durch Nuten hergestellt werden, wobei insbesondere an den Stirnseiten des Kerns schwalbenschwanzförmige Vertiefungen vorgesehen sind. Dadurch wird eine Dämmplatte erzielt, welche sehr gute Dämmeigenschaften aufweist und zugleich als Putzträgerplatte gut geeignet ist.

In der Praxis hat sich jedoch gezeigt, dass sich die Dämmwirkung bei derartigen Dämmplatten im Laufe der Zeit verringert. Untersuchungen haben hier ergeben, dass dies daran liegt, dass das Zellgas im PUR- oder PIR-Kern durch Diffusion schwindet bzw. nach und nach von Luft ersetzt wird. Die Ummantelung aus Polystyrol ist dabei nicht geeignet, einen Diffusionsschutz bereitzustellen.

Aus der DE 20 2009 001 999 U1 ist ferner eine Dämmplatte bekannt geworden, welche ebenfalls aus zwei miteinander verbundenen Elementen aus verschiedenen geschäumten Kunststoffen besteht und für Fassaden, Decken oder dergleichen eingesetzt werden kann. Die Kernschicht ist dabei aus Polyurethan ausgebildet, während beidseits hiervon je eine Deckschicht aus Polystyrol aufkaschiert ist. Alternativ kann der PUR-Schaum für die Kernschicht bei einer Bandfertigung auch von einem Extruder zwischen die beiden Polystyrol-Deckschichten eingespritzt werden. In einem anschließenden Durchlaufofen wird dann eine innige Verbindung der Kernschicht mit den beiden Deckschichten hergestellt. In dieser Ausführungsform kann die Kernschicht auch auf beiden Seiten mit einer Folie aus Aluminium abgedeckt sein. Diese Folien dienen hier bei der kontinuierlichen Bandfertigung als Trägermaterial für den Polyurethanschaum. Auf die beiden Folien ist ferner mithilfe eines handelsüblichen Klebers jeweils die Deckschicht aus Polystyrol aufgeklebt. Der Kleber ist erforderlich, weil geschäumtes Polystyrol auf Aluminium nicht hinreichend haftet.

Auch wenn die beiden hier verwendeten Aluminiumfolien grundsätzlich geeignet sind, um eine gewisse Diffusionsdichtheit des PUR-Kerns herzustellen, so ist dies in diesem Stand der Technik jedoch nicht der Zweck für deren Anordnung; zudem wird auch keine vollständige Diffusionsdichtheit erzielt, da die Folien nur auf den Großflächen, nicht jedoch an den Stirnflächen des Kerns vorliegen. Auch hier kommt es somit im Laufe der Zeit zu einer Verminderung der Wärmedämmfähigkeit.

Ein weiteres Beispiel für ein zweiteilig aufgebautes Dämmelement ist aus der DE 31 19 520 A1 bekannt geworden. Dieses besteht aus einer Schale aus geschäumtem Polystyrol, in welcher ein Kern aus PUR-Hartschaum angeordnet ist. Der Kern kann dabei mit einer im Wesentlichen gasdichten Oberflächenschicht wie insbesondere einer Aluminiumfolie ummantelt sein. Damit soll der Problematik des Ausgasens des Zellgases aus einem PUR-Kern begegnet werden. Ferner ist es aus diesem Stand der Technik auch bekannt, den Kern in die Polystyrol-Schale einzukleben oder alternativ die Schale um den Kern herum zu schäumen.

In der Praxis hat sich jedoch gezeigt, dass die Herstellung des Wärmedämmelements gemäß der DE 31 19 520 A1 durchaus aufwendig ist. Wird kein Kleber verwendet, so entsteht keine stabile Verbindung zwischen der Polystyrol-Schale und der Aluminiumfolie am Kern, weil Polystyrol auf diesem Metall nicht haftet. Wenn der Kleber verwendet wird, muss dieser zu einem geeigneten Zeitpunkt an vorbestimmten Stellen aufgetragen und das Element in diesem Zustand gehandhabt werden, wobei dann hierauf abgestimmt Schale und Kern rechtzeitig zusammengeführt werden müssen. Verzichtet man andererseits auf die diffusionsdichte Kaschierung, so lässt sich zwar eine stabile Verbindung zwischen dem Polyurethan und dem Polystyrol herstellen; es geht jedoch die Wärmedämmwirkung durch das Ausgasen des Zellgases nach und nach verloren. Vor allem ist es jedoch durchaus mit Aufwand verbunden, den vorgefertigten Kern so in einer Form anzuordnen und stabil zu halten, dass dieser zur Herstellung der Polystyrol-Schale umschäumt werden kann.

Der Erfindung lag daher die Aufgabe zu Grunde, ein verbessertes Verfahren zur Herstellung eines Dämmelements mit wenigstens zwei unterschiedlichen geschäumten Kunststoffen als Dämmmaterial und dabei zugleich ein besonders stabiles und langlebiges Dämmelement zu schaffen.

Diese Aufgabe wird durch das Verfahren mit den Merkmalen des Anspruches 1 gelöst. Dieses enthält die folgenden Schritte: Bereitstellen einer Dämmschale aus einem ersten geschäumten Kunststoff, welche im Inneren einen allseits umschlossenen Innenraum aufweist, Einführen wenigstens einer Injektionseinrichtung durch eine Wandung der Dämmschale hindurch in den Innenraum, Einbringen eines Grundmaterials eines zweiten Kunststoffs, welcher sich vom ersten Kunststoff unterscheidet, in den Innenraum der Dämmschale mittels der Injektionseinrichtung, und Entfernen der wenigstens einen Injektionseinrichtung aus dem Innenraum sowie Aufschäumen des zweiten Kunststoffs zur Ausbildung eines Dämmkerns im Innenraum der Dämmschale.

Die Erfindung nimmt somit Abkehr von herkömmlichen Verfahrensweisen und nutzt erstmals die Dämmschale als eine Art Außenform zur Ausbildung des Dämmkerns. Da die Dämmschale einen allseits umschlossenen Innenraum aufweist, kann auf zusätzliche Abgrenzungsmittel zur Verhinderung des Austritts von Kunststoffmaterial im Zuge des Ausschäumens verzichtet werden.

Die erfindungsgemäße Verfahrensweise lässt sich somit mit besonders geringem Aufwand ausführen. Insbesondere sind hierfür nur wenige Vorrichtungselemente zu handhaben. Damit reduziert sich zugleich auch der vorrichtungstechnische Aufwand im Rahmen der Erfindung.

Da das Kunststoffmaterial zur Ausbildung des Dämmkerns erfindungsgemäß in der Dämmschale verschäumt, ergibt sich eine vollflächige und somit sehr stabile Verbindung zwischen den beiden Kunststoffen. Der Dämmkern ist dann dementsprechend zuverlässig und dauerhaft in der Dämmschale gehalten bzw. hält seinerseits die Dämmschale zusammen.

Vorteilhafte Weiterbildungen des erfindungsgemäßen Verfahrens sind Gegenstand der abhängigen Ansprüche 2 bis 7.

Wenn die Dämmschale in Gestalt von wenigstens zwei komplementär zueinander ausgebildeten Schalenteilen bereitgestellt wird, vereinfacht sich deren Herstellungsweise ganz erheblich und kann kostengünstig in großen Stückzahlen erfolgen. Zugleich lassen sich die dementsprechend zueinander passend vorbereiteten Schalenteile dann mit geringem Aufwand zur Dämmschale zusammenfügen. Hierdurch vereinfachen sich die Handhabung der Dämmschale und somit auch das erfindungsgemäße Verfahren weiter.

Dabei kann die Dämmschale aus einem geschäumten Polystyrol ausgebildet werden. Dieser hier als erster geschäumter Kunststoff eingesetzte Werkstoff hat sich in der Praxis insbesondere an Fassadendämmsystemen besonders gut bewährt, da er sehr gut als Putzträgermaterial geeignet ist. Zugleich lassen sich Polystyrole mit bewährten Mitteln zuverlässig aufschäumen und sind besonders gut geeignet, um mit geringem Aufwand ein entsprechendes Formteil auszubilden. Dies wird insbesondere dann erreicht, wenn wie hier im vorliegenden Einsatzfalle für die Dämmschale bevorzugt ein expandiertes Polystyrol (EPS) eingesetzt wird.

Ferner kann der Dämmkern aus einem geschäumten PIR oder PUR ausgebildet werden, womit ein Dämmstoff zum Einsatz kommt, welcher in der Praxis bewährt ist und besonders gute Wärmedämmeigenschaften aufweist. Diese Dämmstoffe lassen sich zudem verfahrenstechnisch mit geringem Aufwand in geeigneten Formen, wie hier der Dämmschale, aufschäumen.

Gemäß einer weiteren vorteilhaften Ausgestaltungsweise kann an der Wandung des Innenraums der Dämmschale wenigstens teilflächig eine diffusionsdichte Schicht, vorzugsweise eine Folie angeordnet werden. Damit wird eine gewisse Diffusionsdichtheit des Dämmkerns erzielt, was vorteilhaft für dessen Dauerhaftigkeit ist und ein Schwinden der Dämmwirkung bei derartigen Dämmelementen im Laufe der Zeit vermindert. Dies ist insbesondere dann vorteilhaft, wenn für den Dämmkern ein Kunststoffmaterial eingesetzt wird, welches ein spezielles Zellgas aufweist. Bei einem Dämmkern z.B. aus PUR oder PIR liegt in der Regel Kohlendioxid oder ein Kohlenwasserstoff als Zellgas vor, wobei dieses durch Diffusion schwindet und nach und nach von Luft ersetzt wird, sofern hier nicht durch ein diffusionsdichtes Material eine Abdichtwirkung hergestellt wird. Zugleich lässt sich jedoch mit geringem verfahrenstechnischen Aufwand eine derartige diffusionsdichte Schicht, etwa eine Folie zwischen den beiden geschäumten Kunststoffen anordnen.

Dabei kann die diffusionsdichte Schicht in den Innenraum der Dämmschale eingeklebt werden. Hierdurch wird zuverlässiger sichergestellt, dass diese im Zuge des Ausschäumens des Innenraums der Dämmschale mit dem zweiten Kunststoff ihre vorgesehene Position beibehält. Der Verfahrensablauf vereinfacht sich dadurch weiter.

Wenn als diffusionsdichte Schicht eine Metallfolie verwendet wird, lässt sich eine besonders gute Diffusionsdichtheit erzielen. Zudem kann man eine derartige Metallfolie verfahrenstechnisch gut handhaben, so dass sich das erfindungsgemäße Verfahren weiter vereinfacht. Insbesondere kommt hierbei eine Aluminiumfolie zum Einsatz, weil diese in sehr dünnen Lagen und mit einem geringen Gewicht bereitstellbar ist und eine sehr gute Diffusionsdichtheit aufweist.

Gemäß einem weiteren Aspekt der vorliegenden Erfindung wird nach Anspruch 8 ein Dämmelement mit wenigstens zwei unterschiedlichen geschäumten Kunststoffen als Dämmmaterial bereitgestellt, welches nach dem erfindungsgemäßen Verfahren hergestellt ist. Dieses enthält eine Dämmschale aus einem ersten geschäumten Kunststoff, welche einen allseits umschlossenen Innenraum aufweist, und einen Dämmkern aus einem zweiten Kunststoff, welcher sich vom ersten Kunststoff unterscheidet, und der in den Innenraum der Dämmschale eingeschäumt ist.

Damit wird erfindungsgemäß ein besonders stabiles und langlebiges Dämmelement erzielt. Es ist zudem vielseitig einsetzbar, da je nach Wahl der verwendeten Kunststoffe besonders günstige Materialeigenschaften insbesondere hinsichtlich der Wärme- und Schalldämmung, der Eignung als Putzuntergrund oder dergleichen einstellbar sind.

Vorteilhafte Weiterbildungen des erfindungsgemäßen Dämmelements sind Gegenstand der abhängigen Ansprüche 9 bis 14. Hiermit werden die oben anhand der abhängigen Verfahrensansprüche erläuterten Vorteile gleichermaßen erzielt.

Die Erfindung wird nachfolgend in Ausführungsbeispielen anhand der Figuren der Zeichnung näher erläutert. Es zeigt:
Fig. 1 eine perspektivische, teilweise im Schnitt gehaltene Ansicht eines erfindungsgemäßen Dämmelements;
Fig. 2 eine perspektivische Ansicht eines Schalenteils der Dämmschale;
Fig. 3 eine Ansicht ähnlich Figur 2, wobei eine Folie im Schalenteil angeordnet ist;
Fig. 4 eine Schnittansicht der Dämmschale, in welcher die Folie eingeklebt ist, vor dem Ausschäumen; und
Fig. 5 eine Schnittansicht ähnlich Figur 4, wobei hier der Dämmkern eingeschäumt ist.

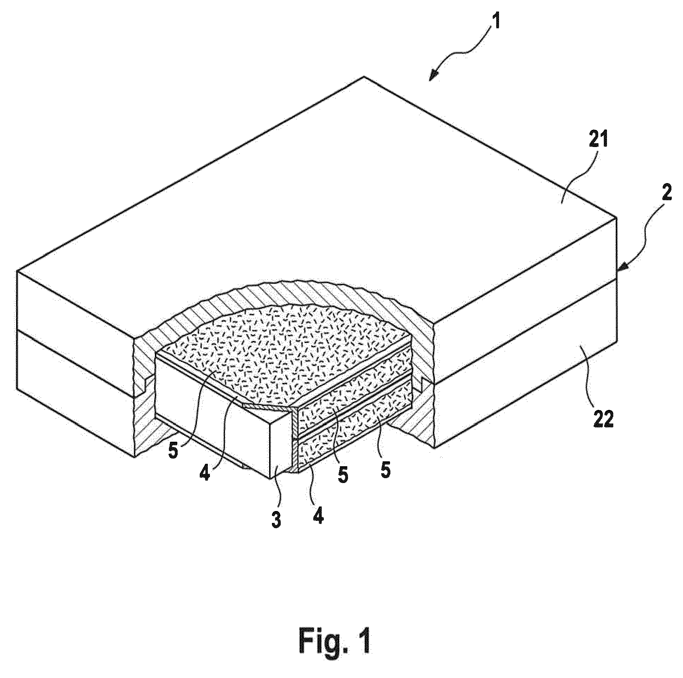

Gemäß der Darstellung in Fig. 1 weist ein Dämmelement 1 eine Dämmschale 2 auf, welche aus einem oberen Schalenteil 21 und einem unteren Schalenteil 22 zusammengesetzt und aus einem geschäumten Polystyrol ausgebildet ist. Diese umschließt vollständig einen Dämmkern 3, der seinerseits teilweise von einer hier zweiteiligen Folie 4 ummantelt ist. Auf einem Teilbereich der Außenoberfläche der Folie 4, hier im Bereich einer Großfläche und von zwei Stirnseitenflächen des Dämmkerns 3, ist ferner ein Kleber 5 flächig aufgetragen, was in der Darstellung jedoch nur auf der oberen Seite und einer Seitenfläche erkennbar ist. Der Kleber 5 ist hier als Schmelzkleber ausgebildet.

Das Dämmelement 1 bildet somit ein fest gefügtes, stabiles Bauelement in Gestalt einer Dämmplatte, welche als Fassadendämmelement, Dachdämmelement oder dgl. eingesetzt werden kann. Es weist im gezeigten Beispiel eine Wärmeleitfähigkeit λ von etwa 0,027 W/mK auf.

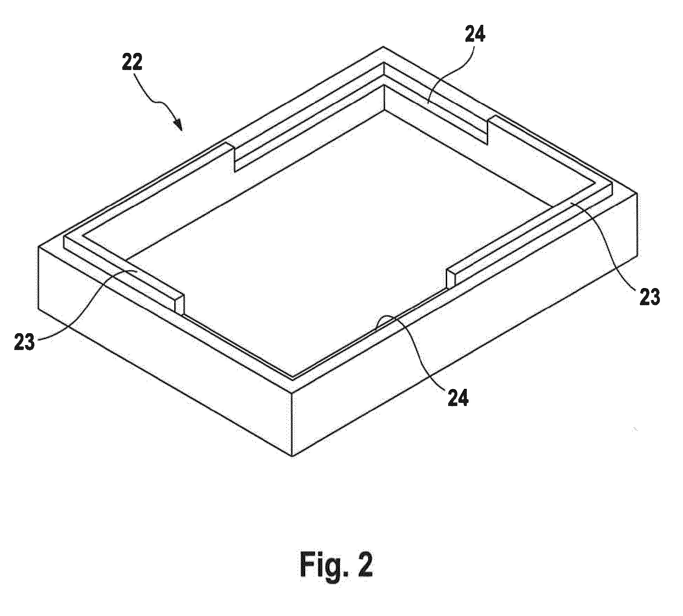

Aus den Fig. 2 bis 5 sind einzelne Verfahrensschritte zur Herstellung des erfindungsgemäßen Dämmelements entnehmbar.

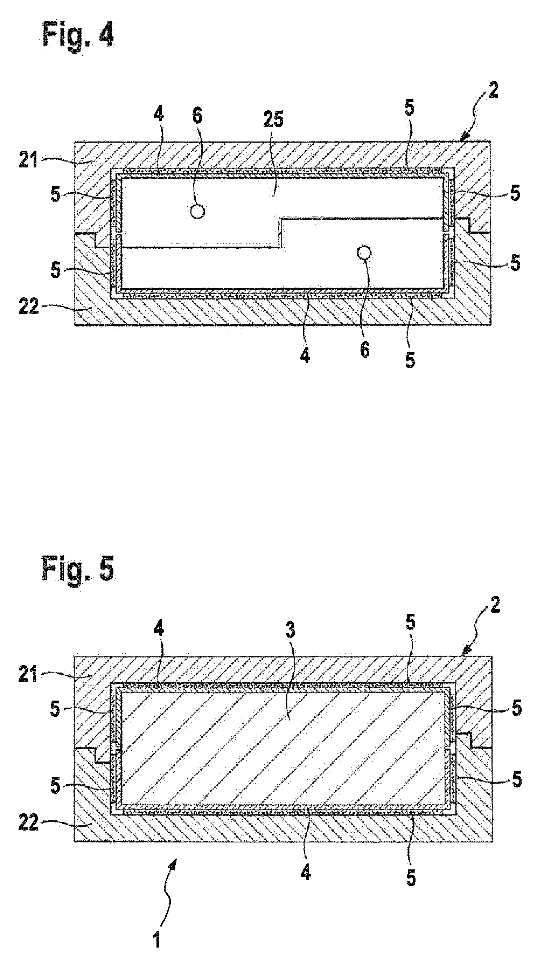

Fig. 2 zeigt das untere Schalenteil 22 in einer perspektivischen Ansicht. Wie hieraus erkennbar ist, weist dieses einen Hohlraum auf, an dessen Rand Vorsprünge 23 bzw. Vertiefungen 24 komplementär zueinander ausgebildet sind. Damit ist es möglich, zwei derart ausgebildete Schalenteile passend derart zusammenzusetzen, dass deren jeweilige Vorsprünge 23 in die entsprechenden Vertiefungen 24 des anderen Schalenteils formschlüssig eingreifen. Dabei bildet sich ein allseits umschlossener Innenraum 25 (vgl. Fig. 4). Die Dämmschale 2 besteht aus zwei derart zusammengesetzten Schalenteilen.

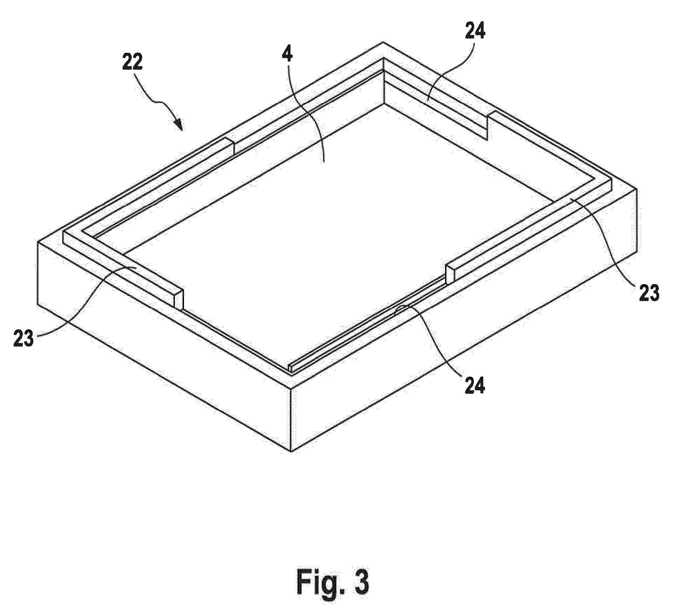

Gemäß der Darstellung in Fig. 3 wird anschließend die Folie 4 in das untere Schalenteil 22 derart eingesetzt, dass diese sowohl den Boden als auch zwei Seitenrandabschnitte von dessen Hohlraum abdeckt. Die Folie 4 ist dabei mittels dem Kleber 5 in den Flächenbereichen des Bodens und der zwei Seitenrandabschnitte im Hohlraum des unteren Schalenteils 22 befestigt.

Das obere Schalenteil 21 ist gleichartig ausgebildet. Wenn dann in einem anschließenden Schritt das obere Schalenteil 21 auf das untere Schalenteil 22 aufgesetzt wird, bilden die Folien 4 in den beiden Schalenteilen 21 und 22 einen allseits mit der Folie verkleideten Hohlraum, den Innenraum 25. Dieser ist aus Fig. 4 erkennbar.

Fig. 4 zeigt einen Schnitt durch die zusammengesetzte Dämmschale 2. Hier sind auch die Enden von zwei Injektionseinrichtungen 6 erkennbar, mittels welchen in einem nachfolgenden Schritt das Grundmaterial eines zweiten Kunststoffs, hier ein PIR, zur Ausbildung des Dämmkerns in den Innenraum der Dämmschale 2 eingebracht wird. Entsprechende Injektionseinrichtungen 6 sind auch am hier nicht sichtbaren gegenüberliegenden Seitenende der Dämmschale 2 angeordnet. Die Dämmschale 2 dient somit auch als Form zum Aufschäumen des Kunststoffs für den Dämmkern 3. Die Injektions-einrichtungen 6 werden dabei durch die Seitenwandung der Dämmschale 2 bis in dessen Innenraum 25 eingeführt und im Zuge des Ausschäumens wieder entfernt. Das Verschäumen des zweiten Kunststoffes im Innenraum 25 findet dabei unter den üblichen Schäumbedingungen statt. Dabei sind aus prozesstechnischen Gründen ggf. zudem geeignete Öffnungen zum Ausführen von beim Aufschäumen verdrängter Luft in der Wand der Dämmschale 2 angeordnet. In manchen Anwendungsfällen kann es zudem sachgerecht sein, die Dämmschale während des Ausschäumens mechanisch zu halten, um dem durch das Ausschäumen aufgebauten Innendruck entgegenzuwirken.

Im Zuge der Aushärtung des eingeschäumten Kunststoffes bildet sich so der Dämmkern 3 im Innenraum 25. In Fig. 5 ist das dementsprechend fertig ausgebildete Dämmelement 1 im Querschnitt gezeigt.

Die Erfindung lässt neben der erläuterten Ausführungsform weitere Gestaltungsansätze zu.

So ist es nicht erforderlich, dass die beiden Schalenteile 21 und 22 wie in der erläuterten Ausführungsform identisch ausgebildet sind. In einer anderen Variante kann das untere Schalenteil 22 z.B. trogförmig vorliegen, während das obere Schalenteil 21 lediglich eine Art Deckel darstellt.

Die Schalenteile 21 und 22 können auch ohne die Vorsprünge 23 und 24 bereitgestellt sein. Durch das Einschäumen des Dämmkerns 3 und die damit erzielbare flächige Haftverbindung desselben mit den Schalenteilen ist auch so eine für viele Anwendungsfälle hinreichende Stabilität des dadurch ausgebildeten Dämmelements 1 erzielbar. Andererseits können die Vorsprünge und Vertiefungen auch anders angeordnet und in anderen Geometrien ausgebildet sein.

Ferner kann als Kunststoff für den Dämmkern 3 auch ein Polyurethan (PUR) oder ein anderer gut dämmender geschäumter Kunststoff wie zum Beispiel Phenolharz-Hartschaum (PH) oder dergleichen eingesetzt werden.

Auch für die Dämmschale 2 kann ein anderer Werkstoff als Polystyrol verwendet werden, wie zum Beispiel Phenolharz-Hartschaum (PH), expandiertes Polyethylen (EPE), expandiertes Polypropylen (EPP), Polylactate oder dgl.

Anstelle eines Schmelzklebers kann für den Kleber 5 auch jeder andere geeignete Klebstoff eingesetzt werden. Beispiele hierfür sind unter anderem auch spezielle Mehrkomponentenkleber etc.

Ferner ist es auch möglich, dass der Kleber 5 nicht flächig auf die Folie 4 aufgebracht wird; stattdessen kann er auch punktuell, streifenförmig oder in Gittermustern etc. vorliegen.

Der Kleber 5 kann aber auch ganz entfallen, wenn ein bloßes Einlegen der Folie 4 in ein Schalenteil ausreicht, um dessen Position sicherzustellen, oder wenn die Folie 4 bei der Herstellung des Schalenteils mit in die hierfür verwendete Form eingebracht und angeschäumt wird.

Im gezeigten Ausführungsbeispiel umschließt die Schicht in Form einer Folie 4 den Dämmkern 3 nur auf vier Seitenflächen. In manchen Anwendungsfällen kann es jedoch auch gewünscht sein, dass alle Außenflächen des Dämmkerns 3 vollständig durch die Folie abgedeckt sind. Dann ist ein Ausgasen des Zellgases weitestgehend unterbunden. Diese Variante führt jedoch zu einem zusätzlichen Aufwand für das Anbringen der Folie 4 an allen Innenflächen der Schalenteile 21 und 22. Andererseits kann die Folie 4 auch gänzlich entfallen, wenn dies der Anwendungsfall ermöglicht.

Die diffusionsdichte Folie 4 kann auch aus einem anderen Material als aus Aluminium bestehen. Grundsätzlich wäre es hier beispielsweise möglich, eine dünne Edelstahlfolie einzusetzen. Alternativ können jedoch auch diffusionsdichte Kunststofffolien oder Kunststoffverbundfolien eventuell mit einer Metallbedampfung etc. verwendet werden.

Ferner ist es auch möglich, dass das erfindungsgemäße Dämmelement auch aus mehr als zwei unterschiedlichen geschäumten Kunststoffen als Dämmmaterial besteht. Für manche Anwendungsfälle kann es sinnvoll sein, mehrere Lagen an geschäumten Dämmstoffen miteinander zu kombinieren, wobei dies völlig unterschiedliche Dämmstoffe sein können oder sich auch zum Beispiel zwei verschiedene Dämmstoffe im Schichtaufbau abwechseln.

Zur verbesserten Putzhaftung bei bestimmten Anwendungen kann eine außenseitige Profilierung der Dämmschalen vorgesehen werden.

## Patentansprüche

1. Verfahren zu Herstellung eines Dämmelements (1) mit wenigstens zwei unterschiedlichen geschäumten Kunststoffen als Dämmmaterial, mit den Schritten:
Bereitstellen einer Dämmschale (2) aus einem ersten geschäumten Kunststoff, welche im Inneren einen allseits umschlossenen Innenraum (25) aufweist,
Einführen wenigstens einer Injektionseinrichtung (6) durch eine Wandung der Dämmschale (2) hindurch in den Innenraum (25),
Einbringen eines Grundmaterials eines zweiten Kunststoffs, welcher sich vom ersten Kunststoff unterscheidet, in den Innenraum (25) der Dämmschale (2) mittels der Injektionseinrichtung (6), und
Entfernen der wenigstens einen Injektionseinrichtung (6) aus dem Innenraum (25) sowie Aufschäumen des zweiten Kunststoffs zur Ausbildung eines Dämmkerns (3) im Innenraum (25) der Dämmschale (2).

2. Verfahren nach Anspruch 1, **dadurch gekennzeichnet, dass** die Dämmschale (2) in Gestalt von wenigstens zwei komplementär zueinander ausgebildeten Schalenteilen (21, 22) bereitgestellt wird.

3. Verfahren nach Anspruch 1 oder 2, **dadurch gekennzeichnet, dass** die Dämmschale (2) aus einem geschäumten Polystyrol, insbesondere EPS, ausgebildet wird.

4. Verfahren nach einem der Ansprüche 1 bis 3, **dadurch gekennzeichnet, dass** der Dämmkern (3) aus einem geschäumten PIR oder PUR ausgebildet wird.

5. Verfahren nach einem der Ansprüche 1 bis 4, **dadurch gekennzeichnet, dass** an der Wandung des Innenraums (25) der Dämmschale (2) wenigstens teilflächig eine diffusionsdichte Schicht (4), vorzugsweise eine Folie, angeordnet wird.

6. Verfahren nach Anspruch 5, **dadurch gekennzeichnet, dass** die diffusionsdichte Schicht (4) in den Innenraum (25) der Dämmschale (2) eingeklebt wird.

7. Verfahren nach Anspruch 5 oder 6, **dadurch gekennzeichnet, dass** als Schicht (4) eine Metallfolie, insbesondere eine Aluminiumfolie, verwendet wird.

8. Dämmelement (1) mit wenigstens zwei unterschiedlichen geschäumten Kunststoffen als Dämmmaterial, hergestellt nach einem Verfahren gemäß einem der Ansprüche 1 bis 7, mit einer Dämmschale (2) aus einem ersten geschäumten Kunststoff, welche einen allseits umschlossenen Innenraum (25) aufweist, und einem Dämmkern (3) aus einem zweiten Kunststoff, welcher sich vom ersten Kunststoff unterscheidet, und der in den Innenraum (25) der Dämmschale (2) eingeschäumt ist.

9. Dämmelement nach Anspruch 8, **dadurch gekennzeichnet, dass** die Dämmschale (2) in Gestalt von wenigstens zwei komplementär zueinander ausgebildeten Schalenteilen (21, 22) ausgebildet ist.

10. Dämmelement nach Anspruch 8 oder 9, **dadurch gekennzeichnet, dass** die Dämmschale (2) aus einem geschäumten Polystyrol, insbesondere EPS, ausgebildet ist.

11. Dämmelement nach einem der Ansprüche 8 bis 10, **dadurch gekennzeichnet, dass** der Dämmkern (3) aus einem geschäumten PIR oder PUR ausgebildet ist.

12. Dämmelement nach einem der Ansprüche 8 bis 11, **dadurch gekennzeichnet, dass** an der Wandung des Innenraums (25) der Dämmschale (2) wenigstens teilflächig eine diffusionsdichte Schicht (4), vorzugsweise eine Folie, angeordnet ist.

13. Dämmelement nach Anspruch 12, **dadurch gekennzeichnet, dass** die diffusionsdichte Schicht (4) in den Innenraum (25) der Dämmschale (2) eingeklebt ist.

14. Wärmedämmelement nach Anspruch 12 oder 13, **dadurch gekennzeichnet, dass** die Schicht (4) eine Metallfolie, insbesondere eine Aluminiumfolie, ist.
